# EUROPÄISCHE PATENTSCHRIFT

(11) **EP 2 732 174 B1**
(45) Veröffentlichungstag und Bekanntmachung des Hinweises auf die Patenterteilung: **09.08.2017**
(21) Anmeldenummer: 12740470.5
(22) Anmeldetag: 14.06.2012
(51) Int. Cl.: F16D 13/68, F16D 25/0638, F16D 25/12

(54) **DOPPELKUPPLUNG**
DUAL CLUTCH
DOUBLE EMBRAYAGE

(30) Priorität: 15.07.2011 DE 102011079275
(43) Veröffentlichungstag der Anmeldung: 21.05.2014
(73) Patentinhaber: Schaeffler Technologies AG & Co. KG, 91074 Herzogenaurach (DE)
(72) Erfinder: HOFSTETTER, Dirk, 76448 Durmersheim (DE)
(86) Internationale Anmeldenummer: PCT/DE2012/000617
(87) Internationale Veröffentlichungsnummer: WO 2013/010521

(56) Entgegenhaltungen:
- EP-A1- 1 195 537
- CH-A5- 677 630
- DE-A1- 10 031 878
- DE-C1- 4 419 232
- US-A1- 2008 229 855

## Beschreibung

Die vorliegende Erfindung betrifft eine Lamellenkupplung mit einem Außenlamellenträger zum Einhängen von Außenlamellen an einem äußeren Formschlußbereich und einem Innenlamellenträger zum Einhängen von Innenlamellen an einem inneren Formschlußbereich, wobei die Formschlußbereiche jeweils eine Verzahnung aufweisen und dazu dienen, die Lamellenträger drehfest mit den zugehörigen Lamellen zu verbinden, wobei Außenlamellen und Innenlamellen zur Übertragung eines Drehmoments miteinander in Reibeingriff bringbar sind.

Eine Lamellenkupplung, wie sie beispielsweise in einem Antriebsstrang eines Kraftfahrzeugs verwendet wird, umfasst üblicherweise einen Eingangslamellenträger mit Eingangslamellen und einen Ausgangslamellenträger mit Ausgangslamellen auf, die abwechselnd in einem Stapel angeordnet sind. Dabei weisen die Lamellen in radial entgegen gesetzten Richtungen Verzahnungen zum Eingriff in meist topfförmige Formschlußbereiche der Lamellenträger auf. Beispielsweise tragen die Eingangslamellen eine Außenverzahnung, die in einen Formschlußbereich eines topfförmigen Lamellenträger eingreift, und die Ausgangslamellen weisen eine Innenverzahnung auf, die in einen Formschlußbereich eines ebenfalls topfförmigen Innenlamellenträgers eingreift.

Beide Lamellenträger umfassen üblicherweise jeweils eine Nabe mit einer weiteren Verzahnung, die drehmomentschlüssig in eine An- bzw. Abtriebswelle des Antriebsstrangs eingreift. Wird der Stapel aus Reiblamellen in axialer Richtung zusammengepresst, so kann ein Drehmoment zwischen den Naben bzw. Wellen übertragen werden.

Da die Nabenerzahnung eines solchen Trägers in hohem Maße belastbar und präzise gefertigt sein muss, ist es üblich, die Nabe beispielsweise aus einem Schmiedeteil herzustellen und sie anschließend mit einem beispielsweise tiefgezogenen, gepressten oder gestanzten Teil zu dem topfförmigen Trägerelement zu verbinden, beispielsweise durch Schweißen. Die DE 103 09 566 A1 beschreibt eine Lamellenkupplung mit einem derartigen, zweiteilig aufgebauten Lamellenträger. Ein Bodenabschnitt des Lamellenträgers ist entlang einer ringförmigen Schweißnaht mit einer Nabe verbunden, die eine Nabenverzahnung trägt. Ein Aufnahmebereich für Lamellen von der Form eines Zylindermantels ist steckbar mit der Bodenplatte verbunden.

Die DE 10 2005 027 610 A1 zeigt ein Getriebe mit einer Nasskupplung, die einen Lamellenträger mit angeformter Nabe umfasst, an die ein aus Blech geformtes , verzahntes Bauteil verschweißt ist. Die DE 100 31 878 A1 zeigt einen Lamellenträger und ein Verfahren zur Herstellung eines Lamellenträgers.

Weiterhin kann ein einstückiger Lamellenträger, gerade für Nasskupplung, mit aus dem Blech des Trägers (spanlos) ausgeformtem Nabenbereich mit im Formschußbereich ausgebildeter Verzahnung zur Drehmomentübertragung hin zu den Reiblamellen vorgesehen sein.

Bekannt ist weiterhin eine Doppelkupplung mit axial hintereinander angeordneten und hydraulisch betätigten (betätigbaren) Einzelkupplungen für ein Doppelkupplungsgetriebe in einem Antriebstrang eines Fahrzeuges, mit einer antriebseitig angeordneten Einzelkupplung, einer getriebeseitig angeordneten Einzelkupplung, einem angetriebenen Kupplungsgehäuse und zwei Kolben-Zylinder-Einheiten, wobei eine erste der Einzelkupplungen das Kupplungsgehäuse mit einer ersten Getriebeeingangswelle und eine zweite der Einzelkupplungen das Kupplungsgehäuse mit einer zweiten Getriebeeingangswelle schaltbar verbindet.

Aus der DE 38 19 702 A1 ist eine solche hydraulisch betätigte (betätigbare) Doppelnasskupplung mit axial hintereinander angeordneten Einzelkupplungen bekannt, wobei die hydraulischen Betätigungseinrichtungen axial vor bzw. axial nach den Einzelkupplungen und auf einem gleichen Durchmesser wie die Einzelkupplungen angeordnet sind. Der axiale Bauraumbedarf für diese Doppelnasskupplung ist daher vergleichsweise groß. Um den axialen Bauraumbedarf zu senken, könnten die hydraulischen Betätigungseinrichtungen radial nach innen verlagert und ggf. axial überlappend mit den Einzelkupplungen angeordnet werden, wie aus den DE 2 191 252, DE 9 114 528, DE 38 38 865, DE 2 116 311 oder DE 35 27 399 bekannt. Eine noch kompaktere Bauweise könnte dadurch erreicht werden, dass zwischen den beiden Einzelkupplungen und den beiden Kolben-Zylinder-Einheiten ein gemeinsamer und mit dem Kupplungsgehäuse fest verbundener Kupplungssteg vorgesehen wird, wie aus der US 3,424,033 oder der EP 1 195 537 bekannt. Bei dem aus diesen beiden Druckschriften bekannten Aufbau bedingt der gemeinsame Steg jedoch ein Übersprechen zwischen den Einzelkupplungen aufgrund der gemeinsam genutzten Abstützung der Einrückkräfte der Einzelkupplungen über den Kupplungssteg.

Beispielsweise bei axial geschachtelten nassen Doppelkupplungen kann der Abtrieb über radial, ineinander geschachtelte Außenlamellenträger erfolgen. Diese Anordnung führt aber zu Schleppverlusten zwischen diesen beiden Außenlamellenträgern. Dieser könnte zwar durch einen erhöhten Teileabstand verringert werden. Dadurch steigt aber der radiale Bauraumbedarf. Weiterhin sind bauraumbeanspruchende zusätzliche Maßnahmen notwendig, um zusätzlich eine gewisse Berstfestigkeit der Lamellenträger zu gewährleisten. Stand der Technik ist hier ein Fangring. Beide Maßnahmen führen aber zu einem erhöhten, radialen Bauraumbedarf.

Diese technischen Rahmenbedingungen (dichtes Nebeneinanderanordnen von Lamellenträgern bzw. Bestfestigkeitserhöhungsmaßnahmen) treten gleichermaßen auch bei anderen Lamellenkupplungsdesigns auf.

Es ist daher die Aufgabe der vorliegenden Erfindung eine Lamellenkupplung der Eingangs genannten Art derart zu verbessern, das es gelingt, Schleppmomente zu begrenzen und den radialen Bauraumbedarf klein zu halten.

Diese Aufgabe wird erfindungsgemäß gelöst durch eine Doppelkupplung mit den Merkmalen gemäß Anspruch 1.

Ein Blechverzahnungsdesign mit einem stirnseitig geschlossenen Ringbereich gerade zur Erhöhung der Steifigkeit und Festigkeit lang auskragender Lamellenträger bietet die Möglichkeit auf einen Fangring zu verzichten und somit radialen Bauraum einzusparen. Zudem bietet ein Lamellenträger mit einer Verzahnung, dessen Kopfkreisdurchmesser kleiner ist als der Durchmesser des angrenzenden, zylindrischen Bereich weiteres, radiales Bauraumpotenzial.

Bevorzugte Ausführungsformen sind Gegenstand der abhängigen Ansprüche.

Die vorliegende Erfindung wird nachfolgend anhand bevorzugter Ausführungsbeispiel in Verbindung mit den zugehörigen Figuren näher erläutert. In diesen zeigen:
- Fig. 1: eine schematische Darstellung eines Ausführungsbeispieles einer Doppelkupplung,
- Fig. 2: eine erste Ausgestaltung des Ausführungsbeispieles nach Fig. 1 mit Betätigungsrichtung beider Einzelkupplungen in Richtung Getriebe,
- Fig. 3: eine weitere Ausgestaltung des Ausführungsbeispieles nach Fig. 1 mit Betätigungsrichtung beider Einzelkupplungen in einander entgegen gesetzte Richtungen,
- Fig. 4: eine erste perspektivische Darstellung eines Ausführungsbeispieles eines Außenlamellenträgers der getriebeseitigen Einzelkupplung K1 beim Ausführungsbeispiel nach Fig. 1,
- Fig. 5: eine zweite perspektivische Darstellung des Ausführungsbeispieles eines Außenlamellenträgers der getriebeseitigen Einzelkupplung K1 nach Fig. 4 beim Ausführungsbeispiel nach Fig. 1,
- Fig. 6: eine erste perspektivische Darstellung eines Ausführungsbeispieles eines Außenlamellenträgers der antriebsseitigen Einzelkupplung K2 beim Ausführungsbeispiel nach Fig. 1,

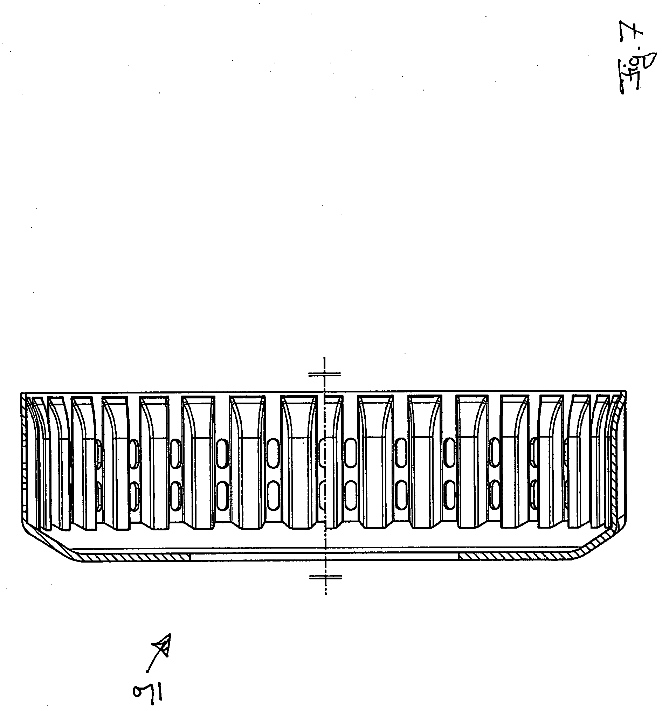

- Fig. 7: eine zweite perspektivische Darstellung des Ausführungsbeispieles eines Außenlamellenträgers der antriebsseitigen Einzelkupplung K2 nach Fig. 6 beim Ausführungsbeispiel nach Fig. 1,
- Fig. 8: eine Schnittdarstellung einer weiteren Ausgestaltung des Ausführungsbeispieles nach Fig. 1 mit Betätigungsrichtung beider Einzelkupplungen in Richtung Getriebe und mit einem Außenlamellenträger nach Fig. 4 und 5 und mit einem Außenlamellenträger nach Fig. 6 und 7.

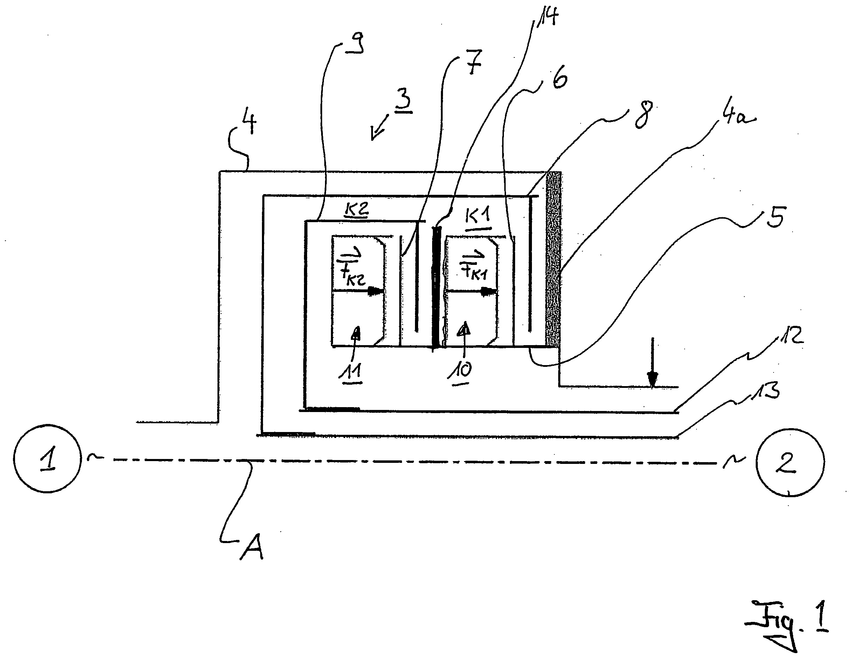

Fig. 1 zeigt schematisch einen Antriebsstrang eines Fahrzeuges mit einem Antrieb 1, einem Doppelkupplungsgetriebe 2 und einer zwischen Antrieb 1 und Doppelkupplungsgetriebe 2 angeordneten Doppelkupplungseinrichtung 3. Das vom Antrieb 1 (vorzugsweise einem Verbrennungsmotor oder einem Elektroantrieb oder einer Kombination aus Verbrennungsmotor und Elektroantrieb) erzeugte Drehmoment wird dabei über das Kupplungsgehäuse 4 um die Doppelkupplungsanordnung 3 herumgeleitet und an eine Kupplungsnabe 5 übertragen. Die Kupplungsnabe 5 ist mit einem Eingangslamellenträger 6 der ersten Einzelkupplung K1 und einem Eingangslamellenträger 7 einer zweiten Einzelkupplung K2 verbunden. Die Einzelkupplungen K1 und K2 umfassen Lamellenpakete (in Fig. 1 nicht im Einzelnen gezeigt), welche jeweils aus zumindest einer eingangsseitigen Reiblamelle und einer ausgangsseitigen Reiblamelle bestehen. Die ausgangsseitigen Reiblamellen sind mit einem Ausgangslamellenträger 8 für die Einzelkupplungen K1 und einem Ausgangslamellenträger 9 für die Einzelkupplung K2 verbunden. Die Ausgangslamellenträger sind ineinander geschachtelt angeordnet. Der äußere Ausgangslamellenträger 8 ist axial länger ausgebildet als der innere Ausgangslamellenträger 9, und zwar in der Form, dass dieser mit seinem Formschlußbereich, an dem die Lamellen eingehängt sind, bis zum Lamellenpaket der getriebeseitigen Einzelkupplung reicht. Über die Betätigungseinrichtungen 10 und 11 können die eingangsseitigen und ausgangsseitigen Reiblamellen in Reibkontakt miteinander gebracht werden, wobei eine mögliche Richtungswahl der jeweiligen Betätigungskräfte über den Kraftvektorpfeil F_{K1} und F_{K2} für die Einzelkupplungen K1 und K2 Figur 1 ersichtlich ist. Die Ausgangslamellenträger 8 und 9 sind mit den beiden Getriebeeingangswellen 12 und 13 des Doppelkupplungsgetriebes verbunden. In Fig. 1 ist die Hauptachse der Doppelkupplungsanordnung 3 mit dem Bezugszeichen A gezeigt.

Weiterhin ist in Fig. 1 der Teilbereich 4a des Kupplungsgehäuses symbolisch hervorgehoben, um darzustellen, dass bei der vorliegenden nasslaufenden Doppelkupplung mit axial angeordneten Teilkupplungen (Einzelkupplungen) die Betätigungskraft der Teilkupplung K1 über ein Bauteil abgestützt wird, welches gleichzeitig auch das Antriebsmoment in das Kupplungssystem einleitet. Das Kupplungsgehäuse erfüllt vorliegend also eine Doppelfunktion.

Über den ebenfalls symbolisch hervorgehobenen Bereich 14 soll zudem verdeutlicht werden, dass eine Abstützung der Betätigungskraft der Teilkupplung K2 über das zusätzliche Bauteil 14 erfolgt, welches im Wesentlichen unabhängig von der Abstützung 4a am Kupplungsgehäuse 4 ist. Dadurch wird verhindert, dass sich die Teilkupplungen K1 und K2 beim Betätigen gegenseitig beeinflussen (Übersprechverhalten).

Die Teilkupplungen könnten dabei auch - entgegen der Ausgestaltung des Ausführungsbeispieles in Fig. 1 - auch beide in Richtung Antrieb betätigt werden.

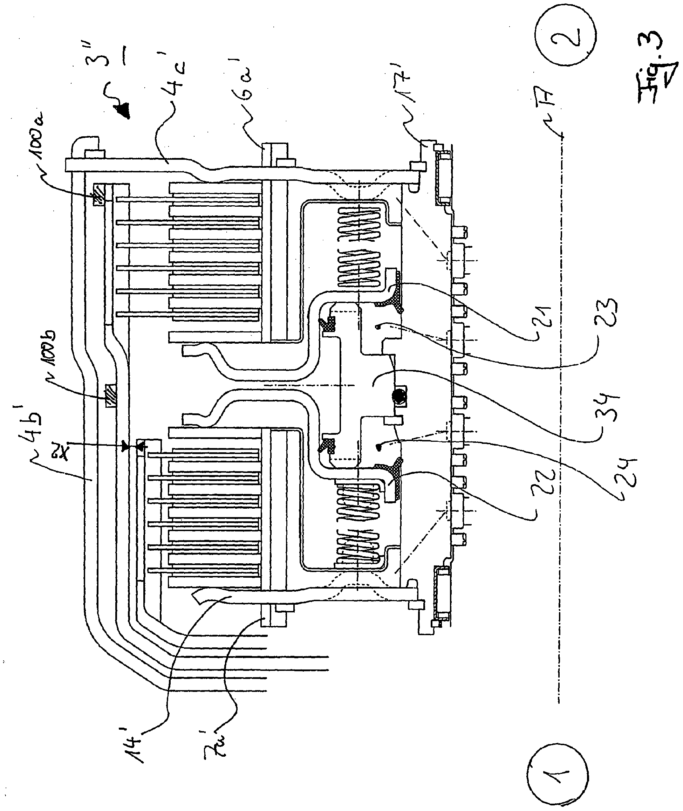

Denkbar wäre auch an Anordnung, bei der die Teilkupplungen K1 und K2 in einander entgegen gesetzte axiale Richtung, und zwar gewissermaßen "von innen nach außen" betätigt werden, wie nachfolgend anhand Figur 3 erläutert. Dabei befinden sich dann die Betätigungselemente der Teilkupplungen axial zwischen den beiden Lamellenpaketen. Bei der Betätigung in axial entgegen gesetzte Richtungen ist es zudem möglich, die Druckräume der Betätigungselemente durch einen gemeinsamen Dichtungsträger, der die Kolbendichtung für beide Teilkupplungen trägt, zu bilden.

Der Darstellung von Fig. 1 ist weiterhin entnehmbar, dass das Kupplungsgehäuse 4 als Kupplungstopf mit integral ausgebildetem Abstützbereich zur Abstützung der axialen Betätigungskraft der getriebeseitigen Einzelkupplung ausgebildet sein kann.

Außerdem ist der Darstellung der Fig. 1 entnehmbar, dass die innenliegenden Eingangslamellenträger mit der Kupplungsnabe verbunden sind.

Des Weiteren ist der Darstellung der Fig. 1 entnehmbar, dass auch das zusätzliche Stützelement 14 mit der Kupplungsnabe verbunden sein kann.

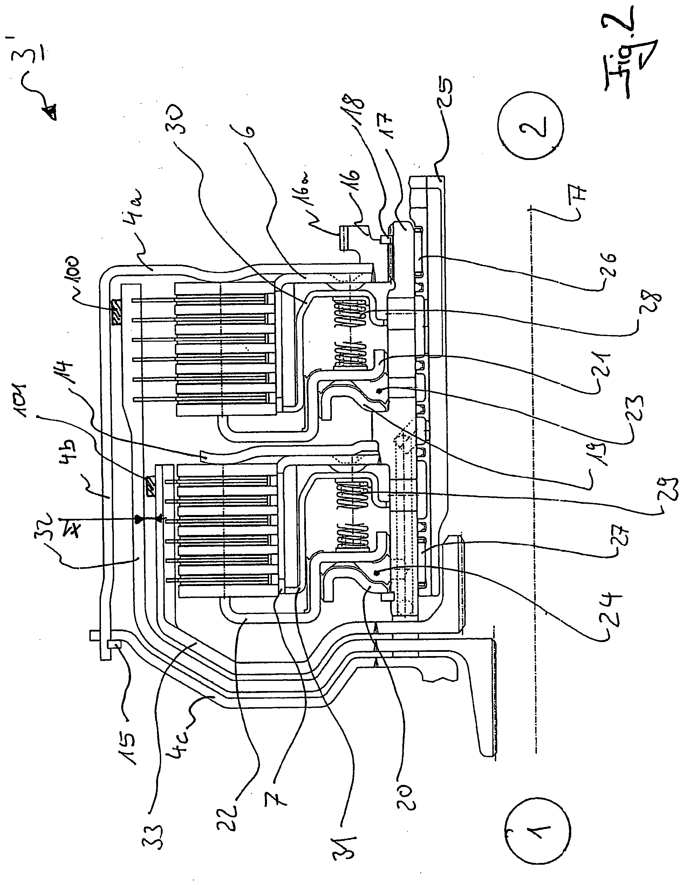

In Fig. 2 ist eine Ausgestaltung dargestellt, bei der die Betätigungskräfte den in Fig. 1 dargestellten Kraftvektoren F_{K1} und F_{K2} entsprechen. Dabei zeigt Fig. 2 einen Halbschnitt entsprechend der Kupplungshauptachse A. Das Kupplungsgehäuse 4 ist hierbei zweiteilig aus einem Kupplungstopf mit dem Bodenbereich 4a und dem zylindrischen Wandbereich 4b und einem Mitnahmeblech 4c gebildet, wobei das Mitnahmeblech 4c und der zylindrische Wandbereich 4b formschlüssig miteinander drehverbunden und axial über einen Sicherungsring 15 gesichert sind. Der Bodenbereich 4a, der auch zur Abstützung der axialen Betätigungskraft der Kupplung K1 dient, ist mit einem Abtriebsbauteil 16 fest verbunden, über das eine Pumpe zur Förderung des Hydraulikmediums antreibbar ist. Das Bauteil 16 weist entsprechend eine Verzahnung 16a zur Übertragung von Drehmoment an eine Hydraulikpumpe auf. Das Bauteil 16 umfasst weiterhin eine radial innen liegende Axialverzahnung, zur Verbindung mit einer Kupplungsnabe 17. Die zwischen dem Bauteil 16 und Kupplungsnabe 17 vorgesehene axiale Steckverzahnung könnte auch über eine Passfederverbindung oder eine andere drehmomentübertragende Verbindung ersetzt werden. Diese axiale Steckverzahnung oder ähnliche Verbindung ist vorliegend über einen Sicherungsring oder eine ähnliche Sicherungseinrichtung, beispielsweise eine Wellenmutter 18 gesichert.

Fig. 2 zeigt zudem den Eingangslamellenträger 6 der Teilkupplung K1, wobei der Eingangslamellenträger 6 vorliegend mit dem Bauteil 16 verbunden ist, so dass eine Drehmomentübertragung unmittelbar über dieses Bauteil 16 erfolgt. Alternativ könnte der Eingangslamellenträger 6 auch direkt an der Kupplungsnabe 17 angeordnet sein.

Fig. 2 zeigt zudem den Eingangslamellenträger 7 der Teilkupplung K2, der direkt an der Kupplungsnabe 17 angebunden ist. Zwischen den Eingangslamellenträger 7 der Teilkupplung K2 und einem Absatz an der Kupplungsnabe 17 ist das zusätzliche Abstützbauteil 14 angeordnet. Dabei ist es ausreichend, dass das zusätzliche Bauteil 14 gegen Verdrehung und gegen Verschiebung in Richtung Getriebe gegenüber der Kupplungsnabe 17 abgestützt wird. Eine zusätzliche axiale Fixierung in Richtung Antrieb ist vorliegend nicht zwingend erforderlich. Abstützbauteil 14 und Eingangslamellenträger 7 könnten auch integral ausgebildet sein.

An der Kupplungsnabe 17 sind zudem Dichtbleche 19 und 20 angeordnet, welche als Dichtungsträger für die beiden hydraulischen Kolben-Zylinder-Einheiten zur Betätigung der Teilkupplungen K1 und K2 wirken. Zwischen den Dichtblechen 19 und 20 und Betätigungskolben 21 und 22 der Teilkupplung K1 und K2 und entsprechenden Teilbereichen der Mantelflächen der Kupplungsnabe 17 werden die Druckräume 23 und 24 gebildet. Diese Druckräume 23 und 24 werden über die Kupplungsnabe 17 sowie einem innen liegenden Ölzuführ- und Abstützbauteil 25 mit Hydraulikmedium versorgt. Zwischen diesem innen liegenden Abstützbauteil 25 und der Kupplungsnabe 17 sind zumindest zwei Radiallager 26 und 27 sowie mehrere Dichtelemente angeordnet.

Vorliegend werden die Betätigungskolben 21 und 22 über Federelemente 28 und 29 in Richtung "Kupplung offen" vorbelastet (wobei allerdings auch eine Vorlast in Richtung "Kupplung geschlossen" zumindest einer der Kupplungen denkbar ist, wodurch sich energetische Vorteile ergäben). Die vorliegend als Schraubenfedern ausgebildeten Federelemente 28 und 29 sind hierbei jeweils an einem Stützbauteil 30 und 31 abgestützt. Dieses Bauteil 30 und 31 wiederum ist am entsprechenden Eingangslamellenträger 6 bzw. 7 axial abgestützt.

Das über die Lamellenpakete der Teilkupplungen K1 und K2 bei Anlegen einer entsprechenden Betätigungskraft übertragbare Drehmoment wird über die Ausgangslamellenträger 32 und 32 an die (in Fig. 2 nicht im Einzelnen gezeigten) Getriebeeingangswellen übertragen, wobei vorliegend die beiden Getriebeeingangswellen als ineinander geschachtelte Vollwelle und Hohlwelle ausgebildet und konzentrisch zueinander angeordnet sind.

Bei der in Fig. 2 gezeigten Ausgestaltung erfolgt eine Beaufschlagung der Einzelkupplungen mit Betätigungskraft in beiden Fällen in Richtung auf das Getriebe hin, wobei die Betätigungskraft der getriebeseitigen Teilkupplung K1 am Kupplungstopf und die Betätigungskraft der antriebsseitigen Teilkupplung K2 an dem separaten Stützelement erfolgt, wobei das Stützelement 14 kein Bestandteil der Kolben-Zylinder-Einheit der zugehörigen Einzelkupplung bildet und ggf. mit dem Eingangslamellenträger 7 integral ausgebildet werden könnte.

In axialer Richtung ist die in Fig. 2 gezeigte Kupplung über axiale Lager zwischen Mitnahmeblech 4c und Ausgangslamellenträger 32 sowie zwischen Ausgangslamellenträger 32 und Ausgangslamellenträger 33 sowie zwischen Ausgangslamellenträger 33 und Stirnseite der Kupplungsnabe 17 in Verbindung mit dem Sicherungselement 18 verspannt. Weiterhin ist das innen liegende Bauteil 25 entweder über eine der Getriebeeingangswellen oder über eine Verbindung zur Kupplungsglocke abgestützt.

In Fig. 3 ist ein weiteres Ausführungsbeispiel der vorliegenden Doppelkupplung gezeigt, wobei nachfolgend nur auf die Unterschiede zu dem vorstehend diktierten Ausführungsbeispielen eingegangen werden soll. Dabei werden gleiche Bauteile mit gleichen Bezugszeichen bezeichnet.

Die Doppelkupplung gemäß dem Ausführungsbeispiel nach Fig. 3 umfasst wiederum ein Kupplungsgehäuse 4', wobei allerdings das Mitnahmeblech auf die Getriebeseite und der Kupplungstopf auf die Antriebsseite angeordnet wurden, also vorliegend eine "Spiegelung" des Kupplungsgehäuses bestehend aus Mitnahmeblech und Kupplungstopf vorgesehen ist.

In dieser gespiegelten Anordnung ist der Abstützbereich der Betätigungskraft der getriebeseitig angeordneten Teilkupplung K1 dann nicht mehr in Bodenbereich 4a, sondern am Mitnahmeblech 4c ausgebildet.

Gemäß dem Ausführungsbeispiel nach Fig. 3 ist zudem der Eingangslamellenträger modifiziert, indem er lediglich einen Lamellenaufnahmebereich 6a' umfasst, welcher mit den Mitnahmeblech 4c' verbunden ist, so dass das Mitnahmeblech 4c' zugleich den Lamellenaufnahmebereich 6a' an der Kupplungsnabe 17' abstützt.

Alternativ zu diesem Beispiel einer integralen Ausbildung von Mitnahmeblech und Eingangslamellenträger könnte auch ein Eingangslamellenträger entsprechend dem Ausführungsbeispiel nach Fig. 2 verwendet werden, wobei dann Eingangslamellenträger und Mitnahmeblech einen unabhängigen radial erstreckten Bereich zur Verbindung mit der Kupplungsnabe 17, ggf. unter Zwischenfügung eines Pumpenabtriebsbereiches vergleichbar dem Bauteil 16 in Fig. 2 umfassen würden.

An der Kupplungsnabe 17 ist außerdem ein Abstützblech 14' angeordnet, welches vorliegend zugleich den Stützbereich des Eingangslamellenträgers 7 der Teilkupplung K2 bildet. Vorliegend ist also wiederum lediglich ein Lamellenhaltebereich 7a' notwendig, welcher mit dem Stützblech 14' verbunden ist. Wiederum könnte alternativ hierzu ein Eingangslamellenträger entsprechend dem Ausführungsbeispiel nach Fig. 2 separat zum Stützblech 14' vorgesehen sein.

Die Betätigungskraft wird über die Betätigungskolben 21 und 22 an die Lamellenpakete der Teilkupplungen K1 und K2 übertragen, wobei die Betätigungskolben 21 und 22 mit einem gemeinsamen Dichtungsträger 34 (der vorliegend die beiden separaten Dichtungsbleche 21 und 22 gemäß Fig. 2 ersetzt) zusammen mit Teilbereichen der Mantelfläche der Kupplungsnabe 17' die Druckräume 23 und 24 bilden.

Die Betätigungskolben 21 und 22 sind gemäß dem Ausführungsbeispiel nach Fig. 3 axial zwischen den Einzelkupplungen K1 und K2 angeordnet und wirken in entgegen gesetzte Richtungen, so dass gemäß dem Ausführungsbeispiel nach Fig. 3 die Betätigungskraft der getriebeseitigen Teilkupplung K1 in Richtung auf das Getriebe wirkt und die Betätigungskraft der antriebsseitig angeordneten Teilkupplung K1 in Richtung auf den Antrieb wirkt.

Der gemeinsame Dichtungsträger 34 ist hierbei als separates und mit der Kupplungsnabe 17' verbundenes Bauteil ausgebildet, wobei ein Dichtungselement vorgesehen ist, um die Druckräume 23 und 24 gegeneinander zu dichten. Die übrigen Merkmale dieses Ausführungsbeispiels nach Fig. 3 entsprechen den im Zusammenhang mit Fig. 1 und im Zusammenhang mit Fig. 2 gezeigten.

Das in Fig. 2 gezeigte Ausführungsbeispiel zeigt also die Betätigung beider Teilkupplungen in Richtung Getriebe, wobei alternativ hierzu auch eine Betätigung beider Teilkupplungen in Richtung Motor möglich ist. Bei Betätigung in Richtung Getriebe erfolgt die Abstützung der axialen Betätigungskraft der getriebeseitigen Teilkupplung über den Bodenbereich des Kupplungstopfes. Bei Betätigung beider Teilkupplungen in Richtung würde eine derartige Abstützung nicht am Kupplungstopf sondern an einem weiteren Stützelement oder ggf. auch unmittelbar an einem der Ausgangslamellenträger erfolgen.

Gemäß dem Ausführungsbeispiel nach Fig. 3 erfolgt die Betätigung der beiden Teilkupplungen in entgegen gesetzter Richtung, wobei sich die Betätigungskolben axial zwischen den beiden Teilkupplungen befinden. Die beiden Betätigungsdruckräume können hierbei durch einen gemeinsamen Dichtungsträger gebildet werden.

Den Ausführungsbeispielen nach den Fig. 1 bis 3 ist also gemeinsam, dass der Antrieb der Doppelkupplungseinrichtung und die Abstützung der Betätigungskräfte oder einer der Teilkupplungen über den Antriebstopf erfolgt und dass die Betätigungskraft der entsprechend anderen Teilkupplung über ein separates Bauteil erfolgt, wodurch ein Übersprechen der beiden Teilkupplungen verhindert wird. Die Betätigung kann dabei in Richtung Getriebe und/oder in Richtung Motor erfolgen. Entsprechend ergibt sich die Möglichkeit, die Teilkupplungen "von innen nach außen", also entsprechend dem Aufbau nach Fig. 3 zu betätigen, wobei die Teilkupplung K1 in Richtung Getriebe und die Teilkupplung K2 in Richtung Motor betätigt wird und wobei die Betätigungskolben axial zwischen den beiden Teilkupplungen angeordnet sind. Bei dieser Betätigung der Teilkupplungen von "innen nach außen" können die Betätigungsdruckräume der Teilkupplungen durch einen gemeinsamen Dichtungsträger gebildet werden, wodurch eine weitere Integration der Bauteile ermöglicht ist.

Die in den Figuren 2 und 3 gezeigten Ausgangslamellenträger umfassen Verzahnungsbereiche (=Formschlußbereiche), an denen die Ausgangslamellen eingehängt werden zur Übertragung des Drehmomentes von den Lamellen auf die Ausgangslamellenträger. Wie Eingangs erwähnt, können diese Ausgangslamellenträger als Blechformteile hergestellt werden (durch spanloses Umformen, wie Tiefziehen, Kaltwalzen oder Drückwalzen), wobei dabei auch die Verzahnungsbereiche spanlos ausgeformt werden können.

Insbesondere bei nasslaufenden Doppelkupplungen wird eine solche Ausgestaltung eines Blechteiles mit ausgeprägten Verzahnungen zur Verbindung mit den Lamellen zur Momenten- und Kraftübertragung zwischen den Lamellenträgern (Innen- oder Außenlamellenträgern) und den Belag- bzw. Stahllamellen (Innen- oder Außenverzahnung) vorteilhaft genutzt werden können.

Dabei zeigen die Ausgestaltungen gemäß den Figuren 2 und 3, dass der Abtrieb der axial angeordneten Kupplungen über ineinander geschachtelte Außenlamellenträger erfolgen kann. Der in den Figuren 1 und 2 mit X1 bzw. X2 bezeichnete Abstand zwischen den (Ausgangs-) Lamellenträgern beschreibt dabei den radialen Abstand zwischen den beiden Ausgangslamellenträgern der Einzelkupplungen K1 und K2 (K1 = getriebeseitige Einzelkupplung und K2 = antriebsseitige Teilkupplung, siehe Definition in Figur 1). Dabei ist die axiale Länge des Außenlamellenträgers der Kupplung K1 anordnungsbedingt derart groß, dass am Kopfkreis der Verzahnung ein Fangring 100 bzw. mehrere Fangringe 100a und 100b angeordnet sind. Dies ist notwendig, um diesen Lamellenträgern bei hohen Drehzahlen abzustützen und große Spannungen und Verformungen zu vermeiden.

Besonders bei derartig lang auskragenden Lamellenträgern, wie hier beim Außenlamellenträger der K1, sind also ein solcher Fangring oder ähnliche Maßnahmen nötig, damit die bei hohen Drehzahl entstehenden Spannungen und Verformungen zu reduzieren. Bei bekannten Blechlamellenträgern in Verwendung bei Doppelnasskupplungen ist weiterhin typischerweise auch der Verzahnungskopfkreisdurchmesser des Außenlamellenträgers der K1 größer als der Durchmesser des zu diesem angrenzenden zylindrischen Bereiches dieses Lamellenträgers und selbstverständlich größer als der Fußkreisdurchmesser der Verzahnung des Außenlamellenträgers der Kupplung K2. Die vorliegend gezeigte, geschachtelte Bauweise der Ausgangslamellenträger der Einzelkupplungen K1 und K2 benötigt gerade aufgrund der Verwendung von Sicherungsmitteln wie Fangringen sowie aufgrund dieser vorerwähnter Ausbildung der Verzahnung aber einen großen radialen Bauraum. Dabei wird der Abstand X1 bzw. X2 vom minimal möglichen Abstand zwischen den Lamellenträgern bestimmt, wobei dieser minimale Abstand abhängt von den zulässigen Schleppverlusten zwischen den Ausgangslamellenträgern der Einzelkupplungen K1 und K2, den Toleranzen der Einzelbauteile, Toleranzkette und eventuellem Taumeln der Bauteile und eben der Länge des jeweiligen Auskragens, die wiederum von der Anzahl an Belagslamellen abhängt, die wiederum von der Auslegung der Drehmomentenkapazität abhängt. Eine optimale geschachtelte Anordnung mit geringen Schleppverlusten und ausreichend festem und steifem Ausgangslamellenträger der Einzelkupplung K2 führt so zu großem radialem Bauraumbedarf. Nachfolgend werden Ausführungsbeispiele von Blechlamellenträgern gezeigt, mit denen diese Nachteile gerade für Hochmomentanwendungen bei geringem zulässigem Schleppmoment und begrenztem Bauraum vermindert bzw. ganz vermieden werden können.

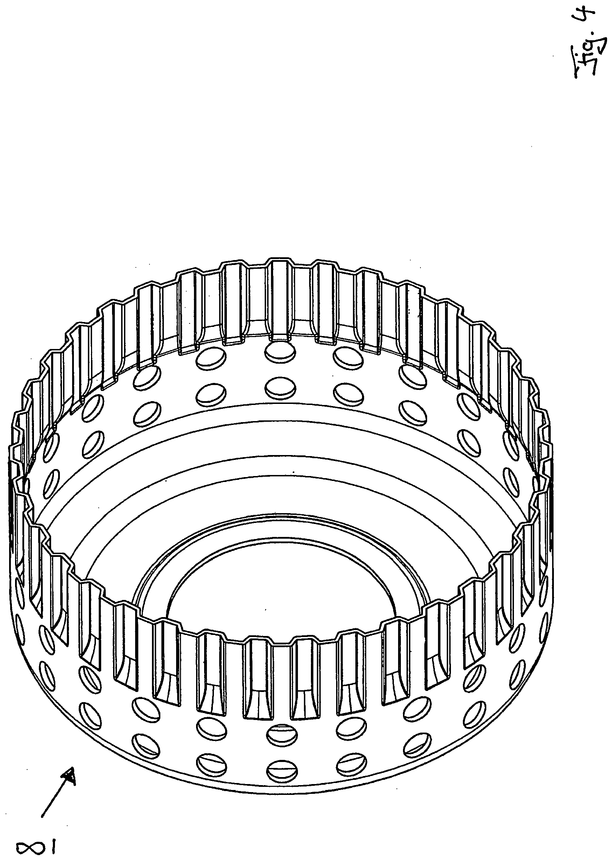

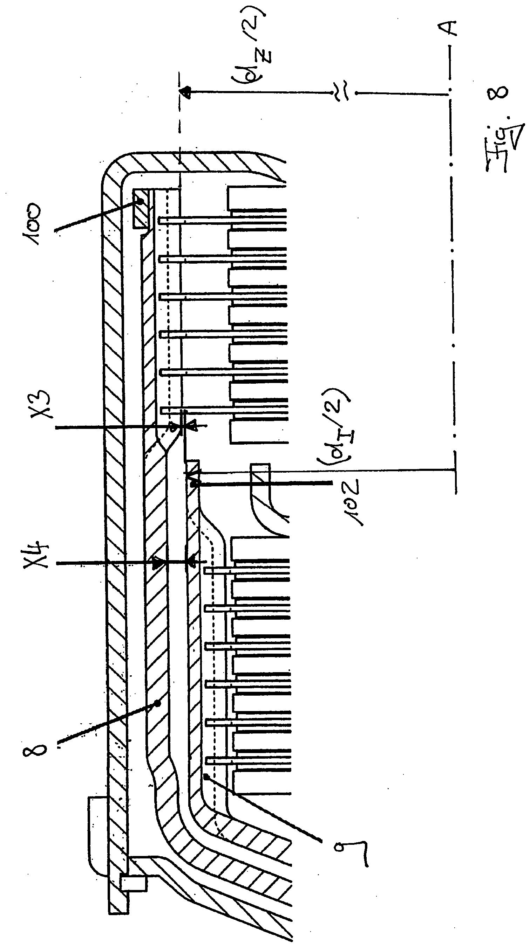

In Figur 4 ist der aus Blech spanlos umgeformte (hier: tiefgezogene) Außenlamellenträger der Einzelkupplung K1 perspektivisch gezeigt, wobei dieser so ausgeführt ist, dass der Kopfkreisdurchmesser der Verzahnung kleiner ist als der Durchmesser des angrenzenden zylindrischen Bereiches. Dies ist insbesondere auch Figur 8 entnehmbar, in welcher der Kopfkreisdurchmesser D_{Z} der Verzahnung sowie der Innendurchmesser D_{I} des an die Verzahnung angrenzenden zylindrischen Bereiches angegeben sind. Umgangssprachlich könnte also betreffend diesem Merkmal formuliert werden, dass die Verzahnung nach radial innen eingeformt wird in den als Blechtopf ausgebildeten Lamellenträger.

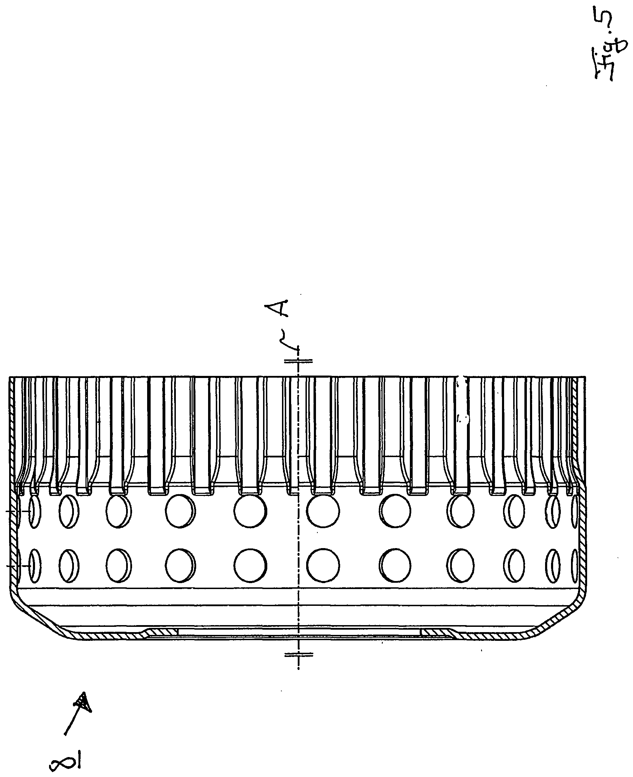

In Figur 5 ist eine Schnittdarstellung des aus Blech spanlos umgeformten (hier: tiefgezogenen) Außenlamellenträgers der Einzelkupplung K1 abgebildet.

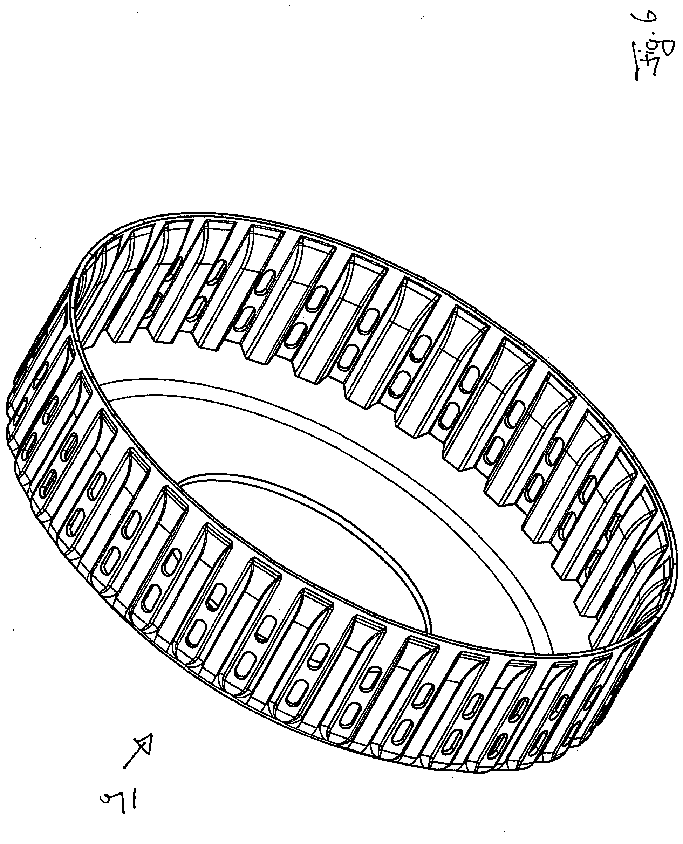

In Figur 6 ist der Außenlamellenträger der Einzelkupplung K2 in perspektivisch abgebildet, wobei zudem auch der Darstellung gemäß Figur 8 entnehmbar ist, dass der Ausgangslamellenträger der Kupplung K2 so ausgeführt ist, dass sich ein geschlossener, zylindrischer Bereich am (offenen) Ende der Verzahnung ergibt, der mit den Bezugszeichen 102 angegeben ist. Dies führt zu einer drastischen Erhöhung der Steifigkeit und Festigkeit in radialer Richtung, also einer drastischen Erhöhung der Festigkeit gegen Bersten. Ein Fangring wird daher trotz lang auskragender Verzahnung nicht nötig. Zudem wird die Umfangssteifigkeit erhöht und somit das Tragbild der Verzahnung verbessert. Dabei sei noch einmal darauf hingewiesen, dass auch der Ausgangslamellenträger der Einzelkupplung K2 als Blechtopf mit nach innen spanlos eingeformter Verzahnung ausgebildet ist.

Derartig ausgebildete Lamellenträger sind immer dann besonders vorteilhaft einsetzbar, wenn eine axiale Schachtelung der Eingangslamellenträger bzw. der Ausgangslamellenträger aufgrund der jeweiligen geschachtelten Bauweise einer Doppelkupplung notwendig wird. Dabei führt das Blechverzahnungsdesign mit einem stirnseitig geschlossenen Ringbereich zur Erhörung der Steifigkeit und Festigkeit lang auskragender Lamellenträger. Dies bietet die Möglichkeit, auf ein Fangring am offenen Ende der Verzahnung zu verzichten und somit radialen Bauraum einzusparen. Zudem bietet ein Lamellenträger mit einer Verzahnung, dessen Kopfkreisdurchmesser kleiner ist als der Durchmesser des angrenzenden zylindrischen Bereiches weiteres radiales Bauraumpotential.

Die Vorteile der Reduzierung des radialen Bauraums sowie der Erhöhung der Steifigkeit und Festigkeit können jedoch auch bei Einzelkupplungen realisiert werden, so dass die vorliegende Lehre nicht auf Doppelkupplungen beschränkt ist.

## Patentansprüche

1. Doppelkupplung (3) mit zwei nasslaufenden Einzelkupplungen (K1, K2) für ein Doppelkupplungsgetriebe in einem Antriebstrang eines Fahrzeuges, wobei eine erste der Einzelkupplungen (K1) das Kupplungsgehäuse (4) mit einer ersten Getriebeeingangswelle (12) und eine zweite der Einzelkupplung (K2) das Kupplungsgehäuse (4) mit einer zweiten Getriebeeingangswelle (13) schaltbar verbindet, wobei jede der als Lamellenkupplung ausgeführten Einzelnasskupplungen einen Außenlamellenträger (8, 9) zum Einhängen von Außenlamellen an einem äußeren Formschlußbereich und ein Innenlamellenträger (6, 7) zum Einhängen von Innenlamellen an einem inneren Formschlußbereich aufweist, und wobei die Formschlußbereiche jeweils eine Verzahnung aufweisen und dazu dienen, die Lamellenträger drehfest mit den zugehörigen Lamellen zu verbinden, wobei Außenlamellen und Innenlamellen zur Übertragung eines Drehmoments miteinander in Reibeingriff bringbar sind, **dadurch gekennzeichnet, dass** die äußeren Formschlußbereiche der Außenlamellenträger (8, 9) in einem spanlosen Umformprozeß eingeformt sind und am offenen Ende eines der äußeren Formschlußbereiche ein durchgängig geschlossener, im wesentlichen zylindrischer Bereich (102) ausgebildet ist, wobei ein Durchmesser (DI) dieses zylindrischen Bereiches (102) kleiner als der Kopfkreisdurchmesser (Dz) der Verzahnung des anderen äußeren Formschlußbereiches ist.

2. Doppelkupplung (3) nach Anspruch 1, mit axial hintereinander angeordneten und hydraulisch betätigten (K1, K2) Einzelkupplungen für ein Doppelkupplungsgetriebe in einem Antriebstrang eines Fahrzeuges, mit einer antriebseitig angeordneten Einzelkupplung (K2), einer getriebeseitig angeordneten Einzelkupplung (K1), einem angetriebenen Kupplungsgehäuse (4) und zwei Kolben-Zylinder-Einheiten, wobei eine erste der Einzelkupplungen (K1) das Kupplungsgehäuse (4) mit einer ersten Getriebeeingangswelle (12) und eine zweite der Einzelkupplung (K2) das Kupplungsgehäuse (4) mit einer zweiten Getriebeeingangswelle (13) schaltbar verbindet, wobei das Kupplungsgehäuse (4) antriebseitig mit einer Antriebwelle und getriebeseitig mit bezüglich der Einzelkupplungen innenliegend angeordneten Eingangslamellenträgern verbunden ist und ein in die Doppelkupplung eingeleitetes Eingangsmoment über das Kupplungsgehäuse (4) um die beiden Einzelkupplungen (K1, K2) herum leitbar ist, wobei das Kupplungsgehäuse (4) einen ersten Abstützbereich für eine Betätigungskraft der getriebeseitig angeordneten Einzelkupplung (K1)aufweist und wobei ein vom ersten Abstützbereich unabhängiger zweiter Abstützbereich zur Abstützung einer Betätigungskraft der antriebseitig angeordneten Einzelkupplung (K2) vorgesehen ist, und wobei der Ausgangslamellenträger der antriebseitig angeordneten Einzelkupplung (K2) als Blechformteil mit den Merkmalen des Anspruches 1 ausgebildet ist und/oder wobei der Ausgangslamellenträger der getriebeseitig angeordneten Einzelkupplung (K1) als Blechformteil mit den Merkmalen des Anspruches 1 ausgebildet ist.

3. Doppelkupplung (3) nach Anspruch 1 oder 2, **dadurch gekennzeichnet dass** das Kupplungsgehäuse (4) einen bezüglich einer Hauptachse der Doppelkupplung (3) im Wesentlichen radial angeordneten und mit der Antriebswelle verbindbaren Mitnahmebereich, einen bezüglich der Hauptachse der Doppelkupplung (3) im Wesentlichen axial angeordneten, zylindrischen Bereich und einen bezüglich einer Hauptachse der Doppelkupplung (3) im Wesentlichen radial angeordnete Verbindungs- und Abstützbereich aufweist.

4. Doppelkupplung (3) nach einem der Ansprüche 1 bis 3, **dadurch gekennzeichnet dass** das Kupplungsgehäuse (4) mit einer Kupplungsnabe (5) verbunden ist, und dass die Kupplungsnabe mit den Eingangslamellenträgern der Einzelkupplungen (K1, K2) verbunden ist.

5. Doppelkupplung (3) nach Anspruch 4, **dadurch gekennzeichnet dass** das Kupplungsgehäuse (4) mit der Kupplungsnabe (5) über eine axiale Steckverzahnung verbunden ist, wobei die axiale Steckverzahnung getriebeseitig angeordnet ist.

6. Doppelkupplung (3) nach einem der Ansprüche 1 bis 5, **dadurch gekennzeichnet dass** die Kolben-Zylinder-Einheiten jeweils einen Betätigungskolben und einen Dichtungsträger aufweisen, welche gemeinsam mit einem Teilbereich der Mantelfläche der Kupplungsnabe (5) einen separaten Betätigungsdruckraum bilden, wobei die Betätigungskolben jeweils über ein Federelement vorbelastet sind, das am entsprechenden Stützelement bzw. am Verbindungs- und Abstützbereich des Kupplungsgehäuses (4) abgestützt ist.

7. Doppelkupplung (3) nach einem der Ansprüche 1 bis 5, **dadurch gekennzeichnet dass** die Kolben-Zylinder-Einheiten jeweils einen Betätigungskolben und einen gemeinsamen Dichtungsträger aufweisen, welche gemeinsam mit einem Teilbereich der Mantelfläche der Kupplungsnabe (5) einen separaten Betätigungsdruckraum bilden, wobei die Betätigungskolben jeweils über ein Federelement vorbelastet sind, das am Stützelement bzw. am Verbindungs- und Abstützbereich des Kupplungsgehäuses abgestützt ist.

8. Doppelkupplung (3) nach Anspruch 6 oder 7, **dadurch gekennzeichnet dass** die Betätigungsdruckräume und die Federelemente jeweils radial innerhalb der Eingangslamellenträger der zugehörigen Einzelkupplung angeordnet sind.

9. Doppelkupplung (3) nach einem der Ansprüche 1 bis 8, **gekennzeichnet durch** ein mit der Kupplungsnabe (5) jedenfalls drehfest verbundenes Stützelement zur Abstützung der Betätigungskräfte der antriebsseitig angeordneten Einzelkupplung, so dass die Betätigungskräfte der Einzelkupplungen (K1, K2) separat abgestützt und dadurch ein Übersprechen der beiden Einzelkupplungen verhindert werden kann.

10. Doppelkupplung (3) nach einem der Ansprüche 1 bis 9, **gekennzeichnet durch** bezüglich der Eingangslamellenträger radial außen liegend angeordnete und ineinander geschachtelte Ausgangslamellenträger.

11. Doppelkupplung (3) nach einem der Ansprüche 1 bis 10, **dadurch gekennzeichnet, dass** die Anlagebereiche der Betätigungskolben an die jeweiligen Lamellenpakete der Einzelkupplungen (K1, K2) jeweils antriebsseitig der zugehörigen Einzelkupplung (K1, K2) angeordnet sind, so dass eine Betätigungsrichtung beider Einzelkupplungen in Richtung Getriebe liegt.

12. Doppelkupplung (3) nach einem der Ansprüche 1 bis 11, **dadurch gekennzeichnet, dass** die Anlagebereiche der Betätigungskolben an die jeweiligen Lamellenpakete der Einzelkupplungen (K1, K2) jeweils zwischen den beiden Einzelkupplungen (K1, K2) angeordnet sind, so dass die Betätigungsrichtungen der antriebsseitigen Einzelkupplung (K2) in Richtung Antrieb und der getriebeseitigen Einzelkupplung (K1) in Richtung Getriebe liegen.

## Claims

1. Double clutch (3) having two wet-running single clutches (K1, K2) for a double clutch transmission in a drive train of a vehicle, a first one of the single clutches (K1) connecting the clutch housing (4) to a first transmission input shaft (12) in a switchable manner, and a second one of the single clutches (K2) connecting the clutch housing (4) to a second transmission input shaft (13) in a switchable manner, each of the single wet clutches which are configured as a multiple disc clutch having an outer multiple disc carrier (8, 9) for suspending outer discs on an outer positively locking region and an inner multiple disc carrier (6, 7) for suspending inner discs on an inner positively locking region, and the positively locking regions having in each case one spline system and serving to connect the multiple disc carriers to the associated multiple discs fixedly so as to rotate with them, it being possible for the outer discs and the inner discs to be brought into frictional engagement with one another in order to transmit a torque, **characterized in that** the outer positively locking regions of the outer multiple disc carriers (8, 9) are formed in a forming process without cutting, and a continuously closed, substantially cylindrical region (102) is configured at the open end of one of the outer positively locking regions, a diameter (DI) of the said cylindrical region (102) being smaller than the tip circle diameter (Dz) of the spline system of the other outer positively locking region.

2. Double clutch (3) according to Claim 1, having hydraulically actuated (K1, K2) single clutches which are arranged axially behind one another for a double clutch transmission in a drive train of a vehicle, having a single clutch (K2) which is arranged on the drive side, a single clutch (K1) which is arranged on the transmission side, a driven clutch housing (4) and two piston/cylinder units, a first one of the single clutches (K1) connecting the clutch housing (4) to a first transmission input shaft (12) in a switchable manner, and a second one of the individual clutches (K2) connecting the clutch housing (4) to a second transmission input shaft (13) in a switchable manner, the clutch housing (4) being connected on the drive side to a drive shaft and on the transmission side to input multiple disc carriers which are arranged on the inside with regard to the single clutches, and it being possible for an input torque which is introduced into the double clutch to be guided around the two single clutches (K1, K2) via the clutch housing (4), the clutch housing (4) having a first supporting region for an actuating force of the single clutch (K1) which is arranged on the transmission side, and a second supporting region which is independent of the first supporting region being provided for supporting an actuating force of the single clutch (K2) which is arranged on the drive side, and the output multiple disc carrier of the single clutch (K2) which is arranged on the drive side being configured as a shaped sheet-metal part having the features of Claim 1, and/or the output multiple disc carrier of the single clutch (K1) which is arranged on the transmission side being configured as a shaped sheet-metal part having the features of Claim 1.

3. Double clutch (3) according to Claim 1 or 2, **characterized in that** the clutch housing (4) has a driving region which is arranged substantially radially with respect to a main axis of the double clutch (3) and can be connected to the drive shaft, a cylindrical region which is arranged substantially axially with regard to the main axis of the double clutch (3), and a connecting and supporting region which is arranged substantially radially with regard to a main axis of the double clutch (3).

4. Double clutch (3) according to one of Claims 1 to 3, **characterized in that** the clutch housing (4) is connected to a clutch hub (5), and **in that** the clutch hub is connected to the input multiple disc carriers of the single clutches (K1, K2).

5. Double clutch (3) according to Claim 4, **characterized in that** the clutch housing (4) is connected to the clutch hub (5) via an axial plug-in spline system, the axial plug-in spline system being arranged on the transmission side.

6. Double clutch (3) according to one of Claims 1 to 5, **characterized in that** the piston/cylinder units in each case have an actuating piston and a seal carrier which form a separate actuating pressure space together with a part region of the circumferential face of the clutch hub (5), the actuating piston being preloaded in each case via a spring element which is supported on the corresponding supporting element or on the connecting and supporting region of the clutch housing (4).

7. Double clutch (3) according to one of Claims 1 to 5, **characterized in that** the piston/cylinder units in each case have an actuating piston and a common seal carrier which form a separate actuating pressure space together with a part region of the circumferential face of the clutch hub (5), the actuating piston being preloaded in each case via a spring element which is supported on the supporting element or on the connecting and supporting region of the clutch housing.

8. Double clutch (3) according to Claim 6 or 7, **characterized in that** the actuating pressure spaces and the spring elements are arranged in each case radially within the input multiple disc carrier of the associated single clutch.

9. Double clutch (3) according to one of Claims 1 to 8, **characterized by** a supporting element which is connected at any rate fixedly to the clutch hub (5) so as to rotate with it, for supporting the actuating forces of the single clutch which is arranged on the drive side, with the result that the actuating forces of the single clutches (K1, K2) can be supported separately and crosstalk of the two single clutches can be prevented as a result.

10. Double clutch (3) according to one of Claims 1 to 9, **characterized by** output multiple disc carriers which are nested inside one another and are arranged so as to lie radially on the outside with regard to the input multiple disc carriers.

11. Double clutch (3) according to one of Claims 1 to 10, **characterized in that** the bearing regions of the actuating pistons against the respective multiple disc assemblies of the single clutches (K1, K2) are arranged in each case on the drive side of the associated single clutch (K1, K2), with the result that an actuating direction of the two single clutches lies in the direction of the transmission.

12. Double clutch (3) according to one of Claims 1 to 11, **characterized in that** the bearing regions of the actuating pistons against the respective multiple disc assemblies of the single clutches (K1, K2) are arranged in each case between the two single clutches (K1, K2), with the result that the actuating direction of the drive-side single clutch (K2) lies in the direction of the drive and the actuating direction of the transmission-side single clutch (K1) lies in the direction of the transmission.

## Revendications

1. Double embrayage (3) comprenant deux embrayages individuels humides (K1, K2) pour une boîte de vitesses à double embrayage dans une chaîne cinématique d'un véhicule, un premier des embrayages individuels (K1) reliant de manière commutable le boîtier d'embrayage (4) à un premier arbre d'entrée de boîte de vitesses (12) et un deuxième des embrayages individuels (K2) reliant de manière commutable le boîtier d'embrayage (4) à un deuxième arbre d'entrée de boîte de vitesses (13), chacun des embrayages humides individuels réalisés sous forme d'embrayage à disques présentant un support de disques externes (8, 9) pour accrocher des disques externes à une région d'engagement positif externe et un support de disques internes (6, 7) pour accrocher des disques internes à une région d'engagement positif interne, et les régions d'engagement positif présentant à chaque fois une denture et servant à relier de manière solidaire en rotation les supports de disques aux disques associés, les disques externes et les disques internes pouvant être amenés en engagement de friction les uns avec les autres pour transmettre un couple, **caractérisé en ce que** les régions d'engagement positif externes des supports de disques externes (8, 9) sont façonnées dans un processus de façonnage sans enlèvement de copeaux et à l'extrémité ouverte de l'une des régions d'engagement positif externes est réalisée une région (102) fermée sur toute son étendue, essentiellement cylindrique, un diamètre (DI) de cette région cylindrique (102) étant inférieur au diamètre du cercle extérieur (Dz) de la denture de l'autre région d'engagement positif externe.

2. Double embrayage (3) selon la revendication 1, comprenant des embrayages individuels disposés axialement les uns derrière les autres et commandés hydrauliquement (K1, K2) pour une boîte de vitesses à double embrayage dans une chaîne cinématique d'un véhicule, comprenant un embrayage individuel (K2) disposé du côté de l'entraînement, un embrayage individuel (K1) disposé du côté de la boîte de vitesses, un boîtier d'embrayage entraîné (4) et deux unités cylindre-piston, un premier des embrayages individuels (K1) reliant de manière commutable le boîtier d'embrayage (4) à un premier arbre d'entrée de boîte de vitesses (12) et un deuxième des embrayages individuels (K2) reliant de manière commutable le boîtier d'embrayage (4) à un deuxième arbre d'entrée de boîte de vitesses (13), le boîtier d'embrayage (4) étant connecté du côté de l'entraînement à un arbre d'entraînement et du côté de la boîte de vitesses à des supports de disques d'entrée disposés à l'intérieur par rapport aux embrayages individuels et un couple d'entrée introduit dans le double embrayage pouvant être guidé par le biais du boîtier d'embrayage (4) autour des deux embrayages individuels (K1, K2), le boîtier d'embrayage (4) présentant une première région de support pour une force d'actionnement de l'embrayage individuel (K1) disposé du côté de la boîte de vitesses et une deuxième région de support indépendante de la première région de support étant prévue pour supporter une force d'actionnement de l'embrayage individuel (K2) disposé du côté de l'entraînement, et le support de disques de sortie de l'embrayage individuel (K2) disposé du côté de l'entraînement étant réalisé sous forme de pièce façonnée en tôle avec les caractéristiques de la revendication 1 et/ou le support de disques de sortie de l'embrayage individuel (K1) disposé du côté de la boîte de vitesses étant réalisé sous forme de pièce façonnée en tôle avec les caractéristiques de la revendication 1.

3. Double embrayage (3) selon la revendication 1 ou 2, **caractérisé en ce que** le boîtier d'embrayage (4) présente une région d'entraînement disposée essentiellement radialement par rapport à un axe principal du double embrayage (3) et pouvant être connectée à l'arbre d'entraînement, une région cylindrique disposée essentiellement axialement par rapport à l'axe principal du double embrayage (3) et une région de connexion et de support disposée essentiellement radialement par rapport à un axe principal du double embrayage (3).

4. Double embrayage (3) selon l'une quelconque des revendications 1 à 3, **caractérisé en ce que** le boîtier d'embrayage (4) est connecté à un moyeu d'embrayage (5) et **en ce que** le moyeu d'embrayage est connecté aux supports de disques d'entrée des embrayages individuels (K1, K2).

5. Double embrayage (3) selon la revendication 4, **caractérisé en ce que** le boîtier d'embrayage (4) est connecté au moyeu d'embrayage (5) par le biais d'une denture enfichable axiale, la denture enfichable axiale étant disposée du côté de la boîte de vitesses.

6. Double embrayage (3) selon l'une quelconque des revendications 1 à 5, **caractérisé en ce que** les unités cylindre-piston présentent à chaque fois un piston d'actionnement et un support d'étanchéité, qui forment, conjointement avec une région partielle de la surface d'enveloppe du moyeu d'embrayage (5), un espace de pression d'actionnement séparé, les pistons d'actionnement étant à chaque fois précontraints par le biais d'un élément de ressort qui est supporté sur l'élément de support correspondant ou sur la région de connexion et de support du boîtier d'embrayage (4).

7. Double embrayage (3) selon l'une quelconque des revendications 1 à 5, **caractérisé en ce que** les unités cylindre-piston présentent chacune un piston d'actionnement et un support d'étanchéité commun qui forment, conjointement avec une région partielle de la surface d'enveloppe du moyeu d'embrayage (5), un espace de pression d'actionnement séparé, le piston d'actionnement étant à chaque fois précontraint par un élément de ressort qui est supporté sur l'élément de support ou sur la région de connexion et de support du boîtier d'embrayage.

8. Double embrayage (3) selon la revendication 6 ou 7, **caractérisé en ce que** les espaces de pression d'actionnement et les éléments de ressort sont à chaque fois disposés radialement à l'intérieur des supports de disques d'entrée de l'embrayage individuel associé.

9. Double embrayage (3) selon l'une quelconque des revendications 1 à 8, **caractérisé par** un élément de support connecté à chaque fois de manière solidaire en rotation au moyeu d'embrayage (5), pour le support des forces d'actionnement de l'embrayage individuel disposé du côté de l'entraînement, de sorte que les forces d'actionnement des embrayages individuels (K1, K2) soient supportées séparément et que de ce fait une interférence des deux embrayages individuels puisse être empêchée.

10. Double embrayage (3) selon l'une quelconque des revendications 1 à 9, **caractérisé par** des supports de disques de sortie disposés, par rapport aux supports de disques d'entrée, en position radialement extérieure et emboîtés les uns des dans les autres. ,

11. Double embrayage (3) selon l'une quelconque des revendications 1 à 10, **caractérisé en ce que** les régions d'appui des pistons d'actionnement sont disposées au niveau des paquets de disques respectifs des embrayages individuels (K1, K2) à chaque fois du côté de l'entraînement de l'embrayage individuel associé (K1, K2), de telle sorte qu'une direction d'actionnement des deux embrayages individuels soit orientée vers la boîte de vitesses.

12. Double embrayage (3) selon l'une quelconque des revendications 1 à 11, **caractérisé en ce que** les régions d'appui des pistons d'actionnement sont à chaque fois disposées au niveau des paquets de disques respectifs des embrayages individuels (K1, K2) entre les deux embrayages individuels (K1, K2) de telle sorte que la direction d'actionnement de l'embrayage individuel du côté de l'entraînement (K2) soit orientée vers l'entraînement et que la direction d'actionnement de l'embrayage individuel du côté de la boîte de vitesses (K1) soit orientée vers la boîte de vitesses.
